# EUROPÄISCHE PATENTSCHRIFT

(11) **EP 1 726 088 B1**
(45) Veröffentlichungstag und Bekanntmachung des Hinweises auf die Patenterteilung: **07.05.2008**
(21) Anmeldenummer: 05716935.1
(22) Anmeldetag: 07.03.2005
(51) Int. Cl.: H02P 9/00

(54) **WINDKRAFTANLAGE**
WIND ENERGY UNIT
EOLIENNE

(30) Priorität: 17.03.2004 DE 102004013131
(43) Veröffentlichungstag der Anmeldung: 29.11.2006
(73) Patentinhaber: SIEMENS AKTIENGESELLSCHAFT, 80333 München (DE)
(72) Erfinder: FLOTTEMESCH, Jörg, 91088 Bubenreuth (DE); HOLFELD, Hermann, 91074 Herzogenaurach (DE); SCHALLER, Stephan, 90518 Altendorf B. Nbg (DE); WEINHOLD, Michael, 91056 Erlangen (DE)
(86) Internationale Anmeldenummer: PCT/EP2005/051003
(87) Internationale Veröffentlichungsnummer: WO 2005/091490

(56) Entgegenhaltungen:
- EP-A- 1 386 078
- US-A- 4 994 684
- US-A- 5 798 631

## Beschreibung

Bislang werden diese Windkraftgeneratoren wie z. B. in S. Müller, M. Deicke, Rik W. de Doncker: "Doubly fed induction generator systems for wind turbines - a viable alternative to adjust speed over a wide range at minimal cost", IEEE industry application magazine, may/june 2002 dargestellt aufgebaut und geregelt. Der Umrichter wird heutzutage bevorzugt aus einer "Rücken an Rücken" Schaltung von zwei selbstgeführten Gleichspannungszwischenkreis-Stromrichtern ausgeführt. Jedem Umrichter ist eine Regeleinheit zugeordnet. Die jeweilige Regeleinheit ermittelt die zu realisierenden Schaltzustände des zugeordneten Stromrichters und übermittelt diese Schaltzustände an die Ansteuerschaltungen des Stromrichters. Die Ansteuerschaltungen sind in der Regel im Stromrichter integriert.

Der rotorwicklungs-seitige Stromrichter des Umrichters bestimmt mit seinen Schaltzuständen die in den Rotorwicklungen fließenden Ströme. Der netzseitige Stromrichter muss die Gleichspannung auf einen konstanten Wert regeln. Der netzseitige Stromrichter kann auch die Gleichspannung für mehrere Windmühlen regeln. In diesem Fall wird ein Gleichspannungsnetz zwischen mehreren Windmühlen aufgespannt. In jedem Fall ist der rotorwicklungs-seitige Stromrichter aber immer genau einer Windmühle zugeordnet.

Die EP 1 386 078 A1 (entspricht WO02/086315 A1) beschreibt eine Windenergieanlage mit einem von einem Rotor antreibbaren elektrischen Generator zum abgeben elektrischer Leistung an ein elektrisches Netz mit daran angeschlossenen Verbrauchern. Die Anlage weist außerdem eine Regelungseinrichtung auf, welche auf einen netzseitigen Frequenzumrichter einwirkt. Im Rahmen der Regelung wird der Phasenwinkel der in das Netz eingespeisten Leistung konstant gehalten, solange die an einem Messpunkt des Netzes abgegriffene Spannung sich in einem bestimmten Spannungsintervall bewegt. Wenn dieses Spannungsintervall über- oder unterschritten ist, erfolgt eine Änderung des Phasenwinkels.

Die US 4,994,684 beschreibt ein Steuersystem für einen Generator mit variabler Rotationsgeschwindigkeit, welche direkt an ein Stromnetz angeschlossen ist. Mit dem Steuersystem soll die Effizienz der Maschine optimiert werden.

Die US 5,798,631 beschreibt eine Windkraftanlage, in welcher eine Steuerung vorhanden ist, die auf den statorwicklungsseitigen Konverter einwirkt, um die Leistung zu maximieren.

Die beschriebene Erfindung bezieht sich insbesondere auf die Regelung des rotorwicklungs-seitigen Stromrichters. Dieser Stromrichter dient als Stellglied zur Erzeugung eines Stromsystems in den Rotorwicklungen. Dieses Stromsystem bestimmt die zwischen den Statorwicklungen der Maschine und dem Drehspannungsnetz ausgetauschte Wirk- und Blindleistung.

Im Gegensatz zu den bekannten Verfahren, umfasst die erfindungsgemäße Regelung vorzugsweise einen NetzspannungsAnalysator, einen Umschalter und zwei separate Regeleinheiten.

Je nach Zustand des Drehspannungsnetzes (gestört oder ungestört) ist die zugeordnete Regeleinheit an das Stellglied (= rotorwicklungs-seitiger Stromrichter) angeschlossen. Der Zustand des Drehspannungsnetzes kann im Netzspannungsanalysator z. B. durch Auswertung der Netzspannung am Verknüpfungspunkt von Windkraftanlage bzw. Windpark mit dem übergeordneten Drehspannungsnetz ermittelt werden: weicht die Netzspannung (bzw. der Betrag des Netzspannungs-Raumzeigers) zu stark von einem Erwartungswert ab, so wird das Drehspannungsnetz als fehlerbehaftet erkannt. Es erfolgt dann durch den Umschalter eine entsprechende Umschaltung zwischen den Regeleinheiten, d. h. der rotorwicklungs-seitige Stromrichter bekommt jetzt seine Schaltzustandssignale von der anderen Regeleinheit.
Umgekehrt erfolgt eine Umschaltung zurück zur Regeleinheit "für ungestörtes Drehspannungsnetz", wenn die am Verknüpfungspunkt gemessene Netzspannung wieder als "ungestört" interpretiert wird, d. h. die Abweichung der Netzspannung von ihrem Erwartungswert ist wieder in einem Toleranzbereich.

Die Regeleinheiten haben damit folgende unterschiedliche Aufgaben:
* Regeleinheit für ungestörtes überlagertes Drehspannungsnetz:
   der Windkraftgenerator wird mit konstantem Leistungsfaktor (exakt: Grundschwingungsverschiebungsfaktor cos ϕ1) betrieben. Die Detail-Ausführung einer solchen Regelung ist aus der Literatur bekannt.

   Der gegebenenfalls vom Netzbetreiber am Verknüpfungspunkt verlangte Leistungsfaktor kann von dem fest eingestellten cos ϕ1 abweichen. Für die Anpassung sorgt eine separate Kompensationsanlage.
* Regeleinheit für gestörtes überlagertes Drehspannungsnetz:
   diese Regeleinheit versucht im Rahmen des Stellbereichs der Windkraftanlage (WKA) die Netzspannung am Verknüpfungspunkt hinsichtlich der Amplitude auf ihren Nennwert (= Sollwert) zu regeln. Durch diese Betriebsweise erfolgen zum einen ein Beitrag der WKA zur Netzfehlerklärung im überlagerten Drehspannungsnetz sowie gleichzeitig eine Netzspannungsstützung. Beides ist aus Sicht des Netzbetreibers eine bevorzugte Betriebsart der WKA bei Netzfehlern.

Eine Ausführungsvariante der in der Regeleinheit implementierten Regelung ist die Folgende:
die am Verknüpfungspunkt zwischen Windkraftanlage und Netz oder Windpark und Netz gemessene Netzspannung wird mit einem Sollwert verglichen. Die Differenz wird in einem Netzspannungsregler bewertet. Dieser Regler kann eine Statik zum Verhindern von Schwingungen zwischen Netzbetriebsmitteln beinhalten. Das Ausgangssignal des Netzspannungsreglers sind die Sollwerte für die vom Stromrichter in die Rotorwicklungen einzuspeisenden Ströme.

Über eine unterlagerte Regeleinheit werden die Rotorwicklungs-Stromistwerte mit diesen Sollwerten verglichen. Die Schaltzustände des rotorwicklungs-seitigen Stromrichters werden durch Auswertung dieser Regelabweichung ermittelt.

Bei den Berechnungen kann es vorteilhaft sein, Informationen zur Winkellage und Drehzahl des Rotors zu benutzen. Beides kann von entsprechenden Zusatzeinrichtungen ermittelt werden (z. B.: Tachogenerator und Drehwinkelgeber).

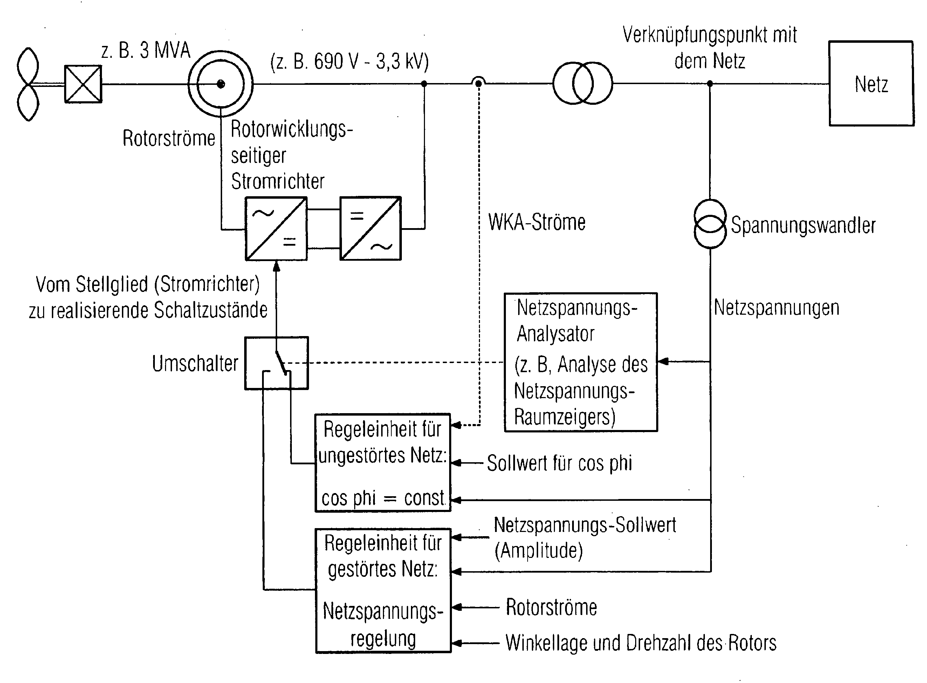

## Patentansprüche

1. Mit einem elektrischen Drehstromnetz verbundene Windkraftanlage mit
- einem einen Rotor mit einer Wicklung aufweisenden doppelt gespeisten Asynchrongenerator
- einem rotorwicklungsseitigen Stromrichter,
- einer dem Generator zugeordnete Regelungseinrichtung, die eine erste und eine zweite Regelungseinheit aufweist und
- einem Netzspannunganalysator, der mit der Regelungseinrichtung und mit dem elektrischen Drehstromnetz verbunden ist und durch den eine Netzstörung ermittelbar ist, welche Netzstörung als eine Abweichung des Netzspannungsraumzeigers von einem vorgegebenen Sollintervall definiert ist,
- die erste Regelungseinheit den Generator derart regelt, dass er mit einem konstanten Grundschwingungsverschiebungsfaktor betrieben wird,
- die zweite Regelungseinheit derart ausgestaltet ist, dass sie versucht, die Netzspannung am Verknüpfungspunkt mit dem Stromnetz im Rahmen des Stellbereiches der Windkraftanlage hinsichtlich der Amplitude auf ihren Sollwert zu regeln, und
- wobei durch die zweite Regelungseinheit im Falle einer erkannten Netzstörung die Regelung für der erste Regelungseinheit übernehmbar ist, während die erste Regelungseinheit für die Regelung bei einem ungestörten Drehstromnetz dient, und
**dadurch gekennzeichnet,**
**dass** beide Regelungseinheiten auf den rotorwicklungsseitigen Stromrichter einwirken.

2. WKA nach Anspruch 1, bei der eine Kompensationseinrichtung mit dem Drehstromnetz verbunden ist, durch die eine Blindleistungsregelung bei einem ungestörten Drehstromnetz auf einen durch einen Grundschwingungsverschiebungsfaktor festgelegten, gewünschten Blindleistungsanteil erfolgt.

3. WKA nach Anspruch 2, bei der die Blindleistungsregelung ausschließlich durch die Kompensationseinrichtung erfolgt und die erste Regelungseinheit für eine Regelung auf einen während eines Normalbetriebs unveränderlichen Grundschwingungsverschiebungsfaktor eingestellt ist.

4. WKA nach einem der vorhergehenden Ansprüche, bei der ein Umschalter vorgesehen ist, der mit dem Netzspannungsanalysator, der ersten und der zweiten Regelungseinheit verbunden ist und durch den nach Vorgabe des Netzspannungsanalysators entweder die erste oder die zweite Regelungseinheit aktiv schaltbar ist.

5. WKA nach einem der vorhergehenden Ansprüche, bei der dem Netzspannungsanalysator Parameter über den Rotorstrom im Generator zuführbar ist.

6. WKA nach einem der vorhergehenden Ansprüche, bei der dem Netzspannungsanalysator Parameter über die Winkellage und die Drehzahl des Rotors im Generator zuführbar ist.

7. WKA nach einem der Ansprüche 1-3, bei der die erste und zweite Regelungseinheit durch ein und dieselbe physikalische Einheit realisiert sind und durch den Betrieb dieser physikalischen Einheit mit unterschiedlichen Regelungsprogrammen jeweils entweder als erste oder zweite Regelungseinheit ausgebildet sind.

## Claims

1. Wind energy unit connected to an electrical 3-phase AC network with
- a doubly-fed asynchronous generator comprising a rotor with a winding
- a rotor winding-side current converter
- a regulation device assigned to the generator, which has a first and a second regulation unit and
- a network voltage analyzer which is connected to the regulation device and the electrical 3-phase AC network and through which a network fault can be determined, said network fault being defined as a deviation of the network voltage sinor representation from a predetermined set interval,
- the first regulation unit regulates the generator such that it is operated with a constant basic oscillation shift factor,
- the second regulation unit is configured such that it attempts, within the framework of the adjustment range of the wind energy unit in respect of the amplitude, to regulate the network voltage at the connection point with the electricity network to its rated value and
- whereby through the second regulation unit in the case of a detected network fault the regulation can be taken over from the first regulation unit by the second regulation unit, while the first regulation unit is used for regulation with a non-faulty 3-phase AC network and
**characterised in that** both regulation devices act on the rotor winding-side current converter.

2. WKA according to claim 1, in which a compensation unit is connected to the 3-phase AC network, through which a reactive power regulation is undertaken with a non-faulty 3-phase AC network to a desired reactive power component determined by a basic oscillation shift factor.

3. WKA according to claim 2, in which the reactive power regulation is undertaken exclusively by the compensation device and the first regulation unit is set for regulating a basic oscillation shift factor that cannot be changed during normal operation.

4. WKA according to one of the preceding claims, in which a commutator is provided which is connected to the network voltage analyser, to the first and the second regulation unit and through which, in accordance with the network voltage analyzer specification, either the first or the second regulation unit can be activated.

5. WKA according to one of the preceding claims, in which parameters relating to the rotor current in the generator can be fed to the network voltage analyzer.

6. WKA according to one of the preceding claims, in which parameters relating to the angular position and the speed of rotation of the rotor in the generator can be fed to the network voltage analyzer.

7. WKA according to one of claims 1-3, in which the first and second regulation unit are implemented by one and the same physical unit and are embodied either as first or second regulation unit by operating this physical unit with different regulation programs.

## Revendications

1. Éolienne reliée à un réseau de courant électrique triphasé, comprenant
- un générateur asynchrone doublement alimenté comportant un rotor avec un enroulement,
- un convertisseur du côté de l'enroulement de rotor,
- un dispositif de régulation qui est associé au générateur et qui comporte une première et une deuxième unité de régulation, et
- un analyseur de tension de réseau qui est relié au dispositif de régulation et au réseau de courant électrique triphasé et par lequel une perturbation sur le réseau peut être détectée, laquelle perturbation sur le réseau est définie comme étant un écart du vecteur spatial de tension de réseau par rapport à un intervalle de consigne prédéterminé,
- la première unité de régulation régulant le générateur de telle sorte qu'il est exploité avec un facteur de décalage d'oscillation fondamentale constant,
- la deuxième unité de régulation étant conçue de telle sorte qu'elle essaie de réguler à sa valeur de consigne l'amplitude de la tension de réseau au point de jonction avec le réseau de courant dans le cadre de la plage de réglage de l'éolienne, et
- la régulation pour la première unité de régulation pouvant être prise en charge par la deuxième unité de régulation en cas de détection d'une perturbation sur le réseau tandis que la première unité de régulation sert à la régulation dans le cas d'un réseau de courant triphasé non perturbé, et
**caractérisée par le fait que** les deux unités de régulation agissent sur le convertisseur situé du côté de l'enroulement de rotor.

2. Éolienne selon la revendication 1, dans laquelle un dispositif de compensation est relié au réseau de courant triphasé, dispositif de compensation par lequel une régulation de puissance réactive s'effectue dans le cas d'un réseau de courant triphasé non perturbé sur une proportion de puissance réactive souhaitée qui est fixée par un facteur de décalage d'oscillation fondamentale.

3. Éolienne selon la revendication 2, dans laquelle la régulation de puissance réactive est effectuée exclusivement par le dispositif de compensation et dans laquelle la première unité de régulation est réglée pour une régulation sur un facteur de décalage d'oscillation fondamentale invariable pendant un fonctionnement normal.

4. Éolienne selon l'une des revendications précédentes, dans laquelle il est prévu un commutateur qui est relié à l'analyseur de tension de réseau, à la première unité de régulation et à la deuxième unité de régulation et par lequel, en fonction de la prescription de l'analyseur de tension de réseau, soit la première unité de régulation soit la deuxième unité de régulation peut être commutée à l'état actif.

5. Éolienne selon l'une des revendications précédentes, dans laquelle des paramètres concernant le courant de rotor dans le générateur peuvent être envoyés à l'analyseur de tension de réseau.

6. Éolienne selon l'une des revendications précédentes, dans laquelle des paramètres concernant la position angulaire et la vitesse de rotation du rotor dans le générateur peuvent être envoyés à l'analyseur de tension de réseau.

7. Éolienne selon l'une des revendications 1 à 3, dans laquelle la première et la deuxième unité de régulation sont réalisées par une seule et même unité physique et dans laquelle on conçoit respectivement soit la première unité de régulation soit la deuxième unité de régulation en exploitant cette unité physique avec des programmes de régulation différents.
